# EUROPÄISCHE PATENTSCHRIFT

(11) **EP 1 318 048 B1**
(45) Veröffentlichungstag und Bekanntmachung des Hinweises auf die Patenterteilung: **10.01.2007**
(21) Anmeldenummer: 01129182.0
(22) Anmeldetag: 10.12.2001
(51) Int. Cl.: B60R 15/00

(54) **Nasszelle, insbesondere zur Verwendung in Wohnwagen oder Reisemobilen**
Wet cell, especially for camping cars or recreational vehicles
Bloc-bain, en particulier pour caravanes ou véhicule de loisirs

(43) Veröffentlichungstag der Anmeldung: 11.06.2003
(73) Patentinhaber: Hobby-Wohnwagenwerk Ing. Harald Striewski GmbH, 24787 Fockbek (DE)
(72) Erfinder: Striewski, Harald, 24787 Fockbek (DE)
(74) Vertreter: Stenger, Watzke & Ring

(56) Entgegenhaltungen:
- EP-A- 0 365 320
- WO-A-96/11124
- DE-A- 10 037 758
- DE-U- 20 003 780

## Beschreibung

Die vorliegende Erfindung betrifft eine Naßzelle, insbesondere zur Verwendung in Wohnwagen oder Reisemobilen, mit einem die Naßzelle in zwei Funktionsbereiche unterteilenden Trennelement, das als vertikal ausgerichtete und horizontal verschiebbare Trennwand ausgebildet ist und das zur Funktionsanpassung der Naßzelle verlagerbar ist.

Naßzellen sind kompakte Sanitärräume, die insbesondere in Fällen von geringem Raumangebot Verwendung finden. So werden Naßzellen beispielsweise in sehr kleinen Wohneinheiten eingebaut.

Insbesondere finden Naßzellen Verwendung in Wohnwagen oder Reisemobilen, in die sie zur Gewährleistung einer sanitären Grundausstattung eingerüstet werden. Angesichts des durch die Fahrzeuggröße begrenzten Raumangebots in einem Wohnwagen bzw. Reisemobil sind bei dessen Raumaufteilung Überlegungen hinsichtlich einer optimierten Raumnutzung vorrangig. Aus diesem Grund sind die in Wohnwagen bzw. Reisemobile integrierten Naßzellen in der Regel besonders kompakt ausgebildet. Eine typische Naßzelle ist beispielsweise als Waschraum und/oder WC eingerichtet und enthält neben einer Toilette, beispielsweise einer Kassettentoilette, ein Waschbecken sowie Stauplatz in Form von Ober- und Unterschränken. Von der Größe ist die Naßzelle dabei typischerweise derart bemessen, daß sie von einer einzigen Person zur Zeit genutzt werden kann. Wird neben einem kombinierten Waschraum und WC in dem Wohnwagen bzw. dem Reisemobil zusätzlich eine Duscheinheit gewünscht, ist die Naßzelle entweder entsprechend vergrößert auszubilden, oder es ist eine zweite Naßzelle mit einer Duschkabine vorzusehen. In jedem Fall bedeutet die Anordnung eines Waschraums und WC's sowie einer Duschgelegenheit in einem Wohnwagen bzw. einem Reisemobil einen erhöhten Platzbedarf für die sanitären Einrichtungen, welcher Platzbedarf zu Lasten des sonstigen Wohnraums in dem Wohnwagen bzw. Reisemobil fällt. Mit anderen Worten Wohn- oder Schlafbereiche müssen entsprechend verkleinert ausgestaltet werden.

Eine gattungsgemäße Naßzelle ist bereits aus der DE 100 37 758 A1 bekannt geworden. Die hier beschriebene Naßzelle ist mittels einer horizontal verschieblich angeordneten Begrenzungswand in zwei Funktionsbereiche unterteilbar. Dabei dient der eine Funktionsbereich als Waschraum und/oder WC-Raum und der andere Funktionsbereich als Duschkabine. Um zu vermeiden, daß aus dem Duschraum Duschwasser in den Waschraum und/oder WC-Raum abfließt, ist am Boden der Duschwanne eine Bodenwanne angeordnet, die eine zum Waschraum und/oder WC-Raum erhöhte Randkante aufweist. Diese erhöhte Randkante der Bodenwanne dient auch gleichzeitig als Anschlag für die Bewegung der Begrenzungswand in Richtung des Wasch- und/oder WC-Raums. Hieraus ergibt sich der Nachteil, daß die Naßzelle für die Bereitstellung eines hinreichend großen Wasch- und/oder WC-Raums einerseits und eines hinreichend großen Duschraums andererseits einen erheblichen Raum einnimmt, was einer wünschenswerterweise anzustrebenden Raumeinsparung entgegensteht.

Eine weitere Naßzellenkonstruktion ist aus der DE 200 03 780 U1 bekannt geworden. Auch die hier beschriebene Naßzelle stellt zwei Funktionsbereiche zur Verfügung, die mittels einer Trennwand voneinander getrennt werden können. Im Unterschied zur gattungsgemäßen Naßzelle nach der DE 100 37 758 A1 weist allerdings die mit der DE 200 03 780 U1 beschriebene Naßzelle eine Trennwand auf, die nicht horizontal verschieblich, sondern um eine Drehachse verdrehbar gelagert ausgestaltet ist. Diese Konstruktion ist in nachteiliger Weise schon von Natur aus nicht dazu geeignet, eine Naßzelle möglichst raumeinsparend auszubilden.

Ausgehend von diesen Überlegungen liegt der Erfindung die Aufgabe zugrunde, eine Naßzelle zu schaffen, welche bei kompakter und raumsparender Bauweise eine Vielzahl von sanitären Funktionen bietet.

Zur Lösung dieser Aufgabe wird mit der Erfindung vorgeschlagen eine Naßzelle, die dadurch gekennzeichnet ist, daß die Trennwand an einer an der Rückwand der Naßzelle ausgebildeten Schiene geführt angeordnet ist, daß die Trennwand zwischen zwei Extremstellungen verlagerbar ist, wobei die Naßzelle in einer ersten Extremstellung der Trennwand als Waschraum und/oder WC und in einer zweiten Extremstellung als Duschkabine nutzbar ist, wobei an der verlagerbaren Trennwand auf der Seite des als Waschraum und/oder WC nutzbaren Funktionsbereiches ein Waschbecken und an einer der Trennwand gegenüberliegenden Wand desselben Funktionsbereiches eine Toilette angeordnet ist, wobei das Waschbecken und die Toilette derart angeordnet sind, daß diese beim Verlagern der Trennwand in die zweite Extremstellung platzsparend nebeneinander bzw. übereinander zu liegen kommen.

Durch das erfindungsgemäß in der Naßzelle angeordnete Trennelement können in der Naßzelle selbst zwei Funktionsbereiche geschaffen werden, wobei zur Funktionsanpassung der Naßzelle das Trennelement verlagert wird. So wird zur Nutzung eines ersten Funktionsbereiches das Trennelement insoweit verlagert, als daß dieser erste Funktionsbereich den gesamten oder wenigstens den überwiegenden Raum der Naßzelle einnimmt, der zweite Funktionsbereich ist in dieser Stellung des Trennelementes auf ein Minimum reduziert bzw. vollständig eliminiert. Durch Verlagern des Trennelementes kann dann der zweite Funktionsbereich maximiert werden, wobei der erste Funktionsbereich minimiert wird, bis hin zu dessen vollständiger Eliminierung. Auf diese Weise genügt eine in ihren Abmessungen den Abmessungen einer gewöhnlichen Naßzelle entsprechende Naßzelle, um mit dieser zwei Funktionsbereiche auszubilden, also mehr Funktionen als in einer gewöhnlichen Naßzelle zu bieten.

Es lassen sich also auf engstem Raum mehr sanitäre Funktionen verwirklichen als für bisherige, gewöhnliche Naßzellen, und das bei Beibehaltung einer kompakten und raumsparenden Bauweise.

An dem Trennelement ist ein Sanitärelement angeordnet. Auf diese Weise wird das Trennelement selbst über die reine Trennfunktion zwischen den Funktionsbereichen und die Verlagerungsfunktion zur Funktionsanpassung der Naßzelle hinaus als Halteelement verwendet, was einen weiteren Beitrag zur Raumeinsparung bildet.

Bei der erfindungsgemäßen Naßzelleist das Trennelement zwischen zwei Extremstellungen verlagerbar, wobei die Naßzelle in einer ersten Extremstellung des Trennelementes als Waschraum und/oder WC und in der zweiten Extremstellung als Duschkabine nutzbar ist. Hierdurch wird eine in ihren Außenabmessungen im wesentlichen einer gewöhnlichen Naßzelle entsprechende Naßzelle zwei unterschiedlichen Funktionen zugänglich gemacht. Durch einfaches Verlagern des Trennelementes kann die Naßzelle entweder als Waschraum bzw. WC genutzt werden, sie kann in der zweiten Extremstellung des Trennelementes aber auch als Dusche verwendet werden. Die erfindungsgemäße Naßzelle vereint in dieser Variation zwei Funktionen, nämlich als Duschkabine und als Waschraum und/oder WC, in einem. Anstelle einer Waschzelle von doppelter Größe oder zwei getrennter Waschzellen vorzusehen, reicht es für die Bereitstellung der genannten Sanitärfunktionen aus, eine einzige Naßzelle in der kompakten und raumsparenden Bauweise gemäß der Erfindung vorzusehen.

Bei der Verwendung in Wohnwagen oder Reisemobilen kann damit bei im wesentlichen gleicher Raumaufteilung entweder eine zusätzliche Sanitärfunktion, nämlich eine Dusche, bereitgestellt werden, oder es kann der für eine separate Dusch-Naßzelle vorzusehende Raum eingespart und dem Wohn- oder Schlafraum, zugeschlagen werden.

An dem verlagerbaren Trennelement ist auf der Seite des als Waschraum und/oder WC nutzbaren Funktionsbereichs ein Waschbecken und an einer dem Trennelement gegenüberliegenden Wand desselben Funktionsbereichs eine Toilette angeordnet, wobei das Waschbecken und die Toilette so angeordnet sind, daß diese beim Verlagern des Trennelementes in die zweite Extremstellung platzsparend nebeneinander bzw. übereinander zu liegen kommen. Durch diese Anordnung wird eine maximale Verkleinerung des als Waschraum und/oder WC nutzbaren Funktionsbereichs bei Umrüstung der Naßzelle zur Duschkabine ermöglicht, die Duschkabine kann eine maximale Größe erhalten.

Das Trennelement ist durch eine vertikal ausgerichtete und horizontal verschiebbare Trennwand gebildet. Mit einer solchen Trennwand ist es besonders einfach, eine erfindungsgemäße Naßzelle in zwei Funktionsbereiche zu unterteilen, wobei die Trennwand zur Funktionsanpassung der Naßzelle horizontal verschoben wird.

Eine solche Trennwand weist bevorzugt an ihren äußeren Rändern Dichtelemente auf, die dichtend an den Wänden der Naßzelle anliegen. Diese Dichtelemente verhindern einen Durchtritt von Wasser bei der Nutzung des einen Funktionsbereiches in den zweiten Funktionsbereich. Die Dichtelemente können beim Verschieben der Trennwand dichtend an den Wänden der Naßzelle entlang geleiten. So wird beispielsweise im Falle einer Duschkabine als einer der Funktionsbereiche verhindert, daß Duschwasser die Duschkabine durch einen zwischen der Trennwand und der Wand der Naßzelle gebildeten Spalt verläßt und in den zweiten Funktionsbereich eindringt.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: teilweise aufgeschnitten in perspektivischer Darstellung ein Ausführungsbeispiel einer erfindungsgemäßen Naßzelle, wobei sich das Trennelement in einer ersten Extremstellung befindet, und
- Fig. 2: in teilweise aufgeschnittener, perspektivischer Darstellung das Ausführungsbeispiel aus Fig. 1 mit in eine zweite Extremstellung verschobenem Trennelement.

In den Figuren sind gleiche Elemente mit gleichen Bezugszeichen versehen.

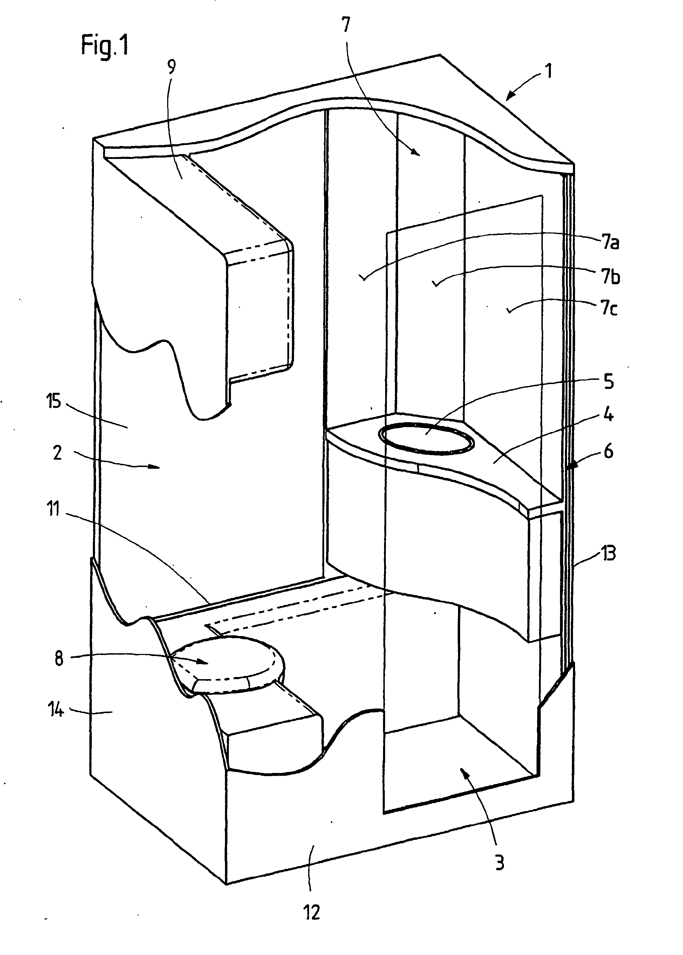

In Fig. 1 ist ein Ausführungsbeispiel einer erfindungsgemäßen Naßzelle 1 in perspektivischer Darstellung mit teilweise weggeschnittenen Seitenwänden und Decke gezeigt. Die Naßzelle 1 ist in Fig. 1 so eingerichtet, daß sie als Waschraum und WC 2 nutzbar ist. Eine mit einer nicht gezeigten Tür verschließbare Eingangsöffnung 3 ermöglicht den Zugang zu der Naßzelle 1. Die Eingangsöffnung 3 ist in einer Frontwand 12 der Naßzelle außermittig angebracht. Eine Trennwand 6 ist unmittelbar an einer der Eingangsöffnung 3 näher gelegenen Seitenwand 13 der Naßzelle 1 angeordnet. Die Trennwand 6 der Naßzelle 1 ist horizontal verschiebbar und kann aus der in Fig. 1 dargestellten Stellung in Richtung einer der Seitenwand 13 gegenüberliegenden Seitenwand 14 der Naßzelle 1 verschoben werden. Auf der der Seitenwand 13 gegenüberliegenden Seite der Trennwand 6 ist an dieser fest angeordnet eine Waschkonsole 4 mit darin eingelassenem Waschbecken 5. Die Vorderfront der Waschkonsole 4 ist im Bereich der Eingangsöffnung 3 ausgeschnitten, um ein Betreten der Naßzelle 1 zu erleichtern. Die Trennwand 6 erstreckt sich nicht nur parallel zu den Seitenwänden 13 und 14 in die Tiefe der Naßzelle 1, sondern mit einem Teil auch entlang einer Rückwand 15 der Naßzelle 1. An der Rückwand 15 der Naßzelle 1 ist eine Schiene 11 angeordnet, in der der parallel zur Rückwand 15 verlaufende Teil der Trennwand 6 geführt ist.

Oberhalb der Waschkonsole 4 befinden sich in dem gesamten Bereich der Trennwand verspiegelte Flächen 7a, 7b und 7c, die insgesamt einen Spiegel 7 bilden.

Auf der Seite der Seitenwand 14 ist in der Naßzelle 1 eine Toilette 8, hier eine Kassettentoilette, angeordnet sowie ein oberhalb der Toilette 8 angeordneter Hängeschrank 9.

Des weiteren weist die Naßzelle 1 ein in der Fig. nicht gezeigtes Leuchtmittel zur Beleuchtung des Innenraums der Naßzelle 1 auf.

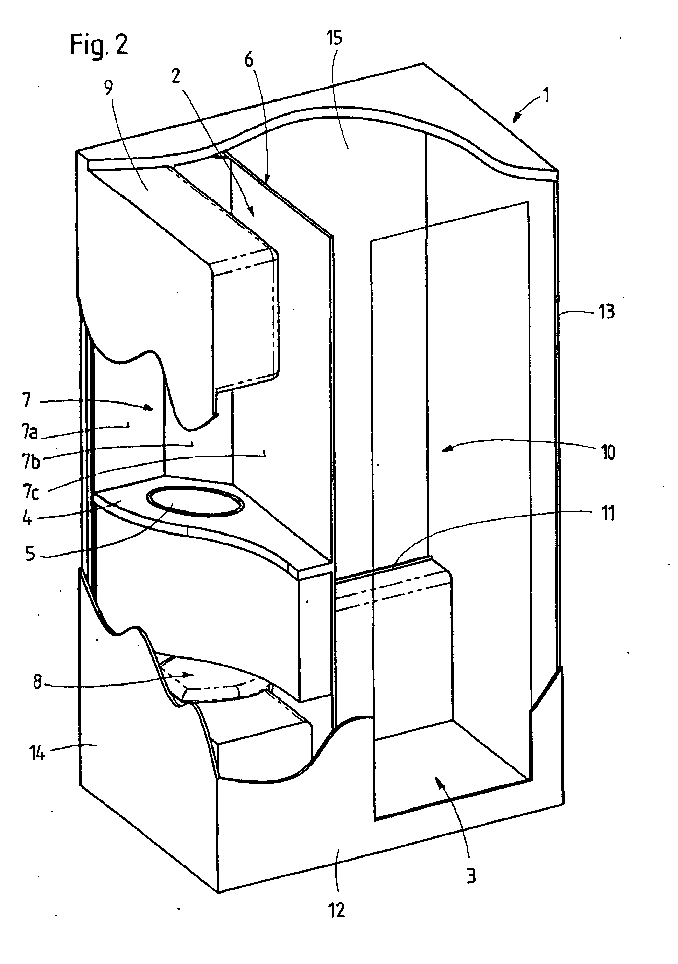

In Figur 2 ist die Naßzelle 1 in einer zweiten Funktion gezeigt. Ausgehend von der Darstellung in Fig. 1 wurde zum Erhalten der in Fig. 2 dargestellten Position die Trennwand 6 mit samt der daran angeordneten Waschkonsole 4 ausgehend von der an der Seitenwand 13 anliegenden Stellung in eine an der Seitenwand 14 anstoßende Stellung verschoben. Der als Waschraum und WC nutzbare Raum 2 ist auf ein Minimalmaß zusammengeschoben und kann durch die Eingangsöffnung 3 nicht mehr erreicht werden. Stattdessen ist in dieser Position eine Duschkabine 10 entstanden, welche durch die Seitenwand 13, die Rückwand 15 und die der Waschkonsole 4 gegenüberliegende Seite der Trennwand 6 begrenzt wird. In der Duschkabine 10 befinden sich in der Figur nicht näher dargestellte Duscharmaturen, welche vorzugsweise an der Trennwand 6 oder der Seitenwand 13 angeordnet sind.

Zu erkennen ist in dieser Figur auch, daß aufgrund der verschachtelten Anordnung von Toilette 8, Waschkonsole 4 und Oberschrank 9 diese Elemente beim Verschieben die Trennwand 6 und Verkleinern des Raumes 2 übereinander zu liegen kommen, was eine maximale Verkleinerung des Raumes 2 erlaubt.

Um ein Durchtreten von Duschwasser durch zwischen den Wänden der Naßzelle 1 und der Trennwand 6 gebildete Spalten zu verhindern, sind an der Trennwand 6 Dichtelemente angeordnet, die dichtend an den Wänden der Naßzelle anliegen.

Die gezeigte Naßzelle weist im wesentlichen die gleichen Abmessungen auf wie eine herkömmliche, lediglich als Waschraum und WC nutzbare Naßzelle, kann jedoch aufgrund der verschiebbaren Trennwand 6 alternativ als Waschraum und WC 2 oder als Duschkabine 10 genutzt werden. Diese Möglichkeit der Doppelnutzung der gezeigten Naßzelle 1 schafft bei gleicher Raumnutzung eine Zusatzfunktion bzw. reduziert bei gleicher Funktionalität den erforderlichen Raum.

### Bezugszeichenliste

- 1: Naßzelle
- 2: Waschraum und WC
- 3: Eingangsöffnung
- 4: Waschkonsole
- 5: Waschbecken
- 6: Trennwand
- 7: Spiegel
- 7a: verspiegelte Fläche
- 7b: verspiegelte Fläche
- 7c: verspiegelte Fläche
- 8: Toilette
- 9: Hängeschrank
- 10: Duschkabine
- 11: Schiene
- 12: Frontwand
- 13: Seitenwand
- 14: Seitenwand
- 15: Rückwand

## Patentansprüche

1. Naßzelle, insbesondere zur Verwendung in Wohnwagen oder Reisemobilen, mit einem die Naßzelle (1) in zwei Funktionsbereiche (2, 10) unterteilenden Trennelement (6), das als vertikal ausgerichtete und horizontal verschiebbare Trennwand ausgebildet ist und das zur Funktionsanpassung der Naßzelle (1) verlagerbar ist, wobei
die Trennwand zwischen zwei Extremstellungen verlagerbar ist, wobei die Naßzelle (1) in einer ersten Extremstellung der Trennwand als Waschraum und/oder WC (2) und in einer zweiten Extremstellung als Duschkabine (10) nutzbar ist, wobei an der verlagerbaren Trennwand auf der Seite des als Waschraum und/oder WC nutzbaren Funktionsbereiches (2) ein Waschbecken (5) und an einer der Trennwand gegenüberliegenden Wand (14) desselben Funktionsbereiches (2) eine Toilette (8) angeordnet ist, wobei das Waschbecken (5) und die Toilette (8) derart angeordnet sind, daß diese beim Verlagern der Trennwand in die zweite Extremstellung platzsparend nebeneinander bzw. übereinander zu liegen kommen, **dadurch gekennzeichnet, daß** die Trennwand in einer an der Rückwand der Naßzelle ausgebildeten Schiene geführt angeordnet ist.

2. Naßzelle nach Anspruch 1, **dadurch gekennzeichnet, daß** diese eine außermittig in einer Frontwand (12) angeordnete Eingangsöffnung (3) aufweist.

3. Naßzelle nach einem der vorhergehenden Ansprüche, **dadurch gekennzeichnet, daß** die Vorderfront des Waschbeckens (5) im Bereich der Eingangsöffnung (3) ausgeschnitten ausgebildet ist.

4. Naßzelle nach einem der vorhergehenden Ansprüche, **dadurch gekennzeichnet, daß** an der Trennwand oberhalb des Waschbeckens (5) verspiegelte Flächen (7a, 7b, 7c) angeordnet sind.

5. Naßzelle nach einem der vorhergehenden Ansprüche, **dadurch gekennzeichnet, daß** oberhalb der Toilette (8) ein Hängeschrank (9) angeordnet ist.

6. Naßzelle nach einem der vorhergehenden Ansprüche, **dadurch gekennzeichnet, daß** diese über Leuchtmittel verfügt.

7. Naßzelle nach einem der vorhergehenden Ansprüche, **dadurch gekennzeichnet, daß** die Trennwand auf der Seite des als Duschraum (10) nutzbaren Funktionsbereiches über Duscharmaturen verfügt.

## Claims

1. Wet cell, in particular for use in caravans or mobile homes, with a partition element (6) which divides the wet cell (1) into two functional areas (2, 10), is constructed as a vertically oriented and horizontally displaceable partition wall and is movable for functional adaptation of the wet cell (1), wherein the partition wall is movable between two extreme positions, wherein the wet cell (1) can be used in a first extreme position of the partition wall as a wash room and/or WC (2) and can be used in a second extreme position as a shower cubicle (10), wherein on the movable partition wall a wash basin (5) is disposed on the side of the functional area (2) which can be used as a wash room and/or WC and a toilet (8) is disposed on a wall (14) of the same functional area (2) opposite the partition wall, wherein the wash basin (5) and the toilet (8) are disposed in such a way that when the partition wall is moved into the second extreme position in order to save space the wash basin and the toilet are positioned adjacent to one another or above one another, **characterised in that** the partition wall is disposed so that it is guided in a rail constructed on the rear wall of the wet cell.

2. Wet cell as claimed in Claim 1, **characterised in that** it has an entrance opening (3) disposed off-centre in a front wall (12).

3. Wet cell as claimed in any one of the preceding claims, **characterised in that** the front face of the wash basin (5) is constructed with a cutout in the region of the entrance opening (3).

4. Wet cell as claimed in any one of the preceding claims, **characterised in that** reflective surfaces (7a, 7b, 7c) are disposed on the partition wall above the wash basin (5).

5. Wet cell as claimed in any one of the preceding claims, **characterised in that** a suspended cupboard is disposed above the toilet (8).

6. Wet cell as claimed in any one of the preceding claims, **characterised in that** it has lighting means.

7. Wet cell as claimed in any one of the preceding claims, **characterised in that** the partition wall has shower fittings on the side of the functional area which can be used as a shower room (10).

## Revendications

1. Cabine de toilette, destinée en particulier aux caravanes ou mobil-homes, avec un élément séparateur (6) partageant la cabine de toilette (1) en deux zones fonctionnelles (2, 10), conformée comme une cloison verticale et mobile à l'horizontale et pouvant être déplacée en vue de l'adaptation fonctionnelle de la cabine de toilette (1), dans laquelle la cloison peut être déplacée entre deux positions extrêmes, la cabine de toilette (1) pouvant servir de salle d'eau et/ou de W.-C. (2) dans la première position extrême de la cloison et de cabine de douche (10) dans une seconde position extrême, un lavabo (5) étant disposé sur la cloison mobile du côté de la zone fonctionnelle (2) utilisable comme salle d'eau et/ou comme W.-C. et un W.-C. (8) sur la paroi (14) de cette même zone fonctionnelle (2) faisant face à la cloison et le lavabo (5) et le W.-C. (8) étant disposés de telle sorte qu'ils sont juxtaposés ou superposés dans un minimum de place lorsque la cloison est déplacée dans la deuxième position extrême, **caractérisée en ce que** la cloison est disposée de façon à pouvoir être guidée dans un rail formé sur la paroi arrière de la cabine de toilette.

2. Cabine de toilette selon la revendication 1, **caractérisée en ce qu'**elle possède une ouverture d'entrée (3) disposée en position décentrée dans une paroi avant (12).

3. Cabine de toilette selon l'une des revendications précédentes, **caractérisée en ce que** la face avant du lavabo (5) est échancrée au niveau de l'ouverture d'entrée (3).

4. Cabine de toilette selon l'une des revendications précédentes, **caractérisée en ce que** des surfaces de miroir (7a, 7b, 7c) sont disposées sur la cloison au-dessus du lavabo (5).

5. Cabine de toilette selon l'une des revendications précédentes, **caractérisée en ce qu'**une armoire suspendue (9) est disposée au-dessus des W.-C. (8).

6. Cabine de toilette selon l'une des revendications précédentes, **caractérisée en ce qu'**elle possède des moyens d'éclairage.

7. Cabine de toilette selon l'une des revendications précédentes, **caractérisée en ce que** la cloison possède du côté de la zone fonctionnelle utilisable comme cabine de douche (10) une robinetterie de douche.
